# EUROPEAN PATENT SPECIFICATION

(11) **EP 0 922 414 B1**
(45) Date of publication and mention of the grant of the patent: **30.07.2003**
(21) Application number: 98116315.7
(22) Date of filing: 28.08.1998
(51) Int. Cl.: A47B 31/00, A47B 95/04

(54) **Shock absorber of service cart**
Stossdämpfer für Kundenbedienwagen
Amortisseur de chocs pour des chariots de services

(30) Priority: 05.12.1997 JP 1076797
(43) Date of publication of application: 16.06.1999
(73) Proprietor: JAMCO CORPORATION, Mitaka-shi, Tokyo 181 (JP)
(72) Inventor: Saku, Fumiaki c/o Jamco Corporation, Tokyo (JP); Oda, Yutaka c/o Jamco Corporation, Tokyo (JP)
(74) Representative: TER MEER STEINMEISTER & PARTNER GbR

(56) References cited:
- GB-A- 1 497 764
- NL-C1- 1 002 515

## Description

### BACKGROUND OF THE INVENTION

The present invention relates to a roller-type shock absorber to be equipped in the rim of a service cart for serving in-flight meals on airplanes.
The NL-C 1 002 515 discloses a service cart of the above kind.

The in-flight meal server called a service cart for serving meals and beverages in a cabin of an airplane is equipped with a box-shaped body for storing trays, a caster mounted on the bottom portion of the body, and a space for positioning bottles and the like on the top portion of the body.

On the front and back sides of the body are equipped hinged doors, and on the front and back sides of the upper portion of the body are mounted handles for pushing the server.

### SUMMARY OF THE INVENTION

The side wall surfaces of the box-shaped body are covered with a surface material of a decorative sheet and the like. Such surface material of the service cart may attract the attention of passengers, since it passes the eye level of the seated passengers.

Therefore, by displaying an advertisement or a trademark of a company, the company may effectively appeal to the passengers the service of the company.

However, the surface material of the service cart may easily be damaged, since the cart is used not only in the cabin, but also on land for loading food and the like.

Since such damage to the surface attracts the attention of passengers, it is necessary to replace the surface material at once.

In the conventional service carts for serving in-flight meals, there were no means to prevent the damage on the surface of the service carts which may cause the passengers to feel unpleasant, but it was difficult to repair such damage to the surface.

Therefore, the present invention aims at providing a roller-type shock absorber for protecting the surface material or the rim portion of the service cart for serving in-flight meals.

The shock absorber on the service cart of the present device comprises a service cart equipped with a box-shaped body for storing trays mounting tableware, hinged doors mounted on the front and back sides of said body, and a caster mounted on the lower portion of said body, wherein the side wall surfaces of said body comprises a honeycomb panel and rim members mounted on both side rim portions of said honeycomb panel, and having rollers rotatably fixed to said rim members.

The GB-A 1 497 764 discloses a furniture buffer which may be secured to furniture, such as a trolley for example. The buffer comprises an core mountable upon a support member of the furniture, a wheel being rotatably retained upon the core said wheel being axially fixed with respect to the core by a plurality of projections of the core.

Moreover, the outer circumferential surface of the rollers are formed to have a size so as to protrude to the outer area than the corner portion of said body, and said rollers are formed of an elastic material such as rubber and the like.

### BRIEF DESCRIPTION OF THE DRAWINGS

FIG. 1 is a schematic view of the service cart for in-flight meals applying the present device; and
FIG. 2 is a cross-sectional view taken at line A-A of FIG. 1.

### PREFERRED EMBODIMENT OF THE INVENTION

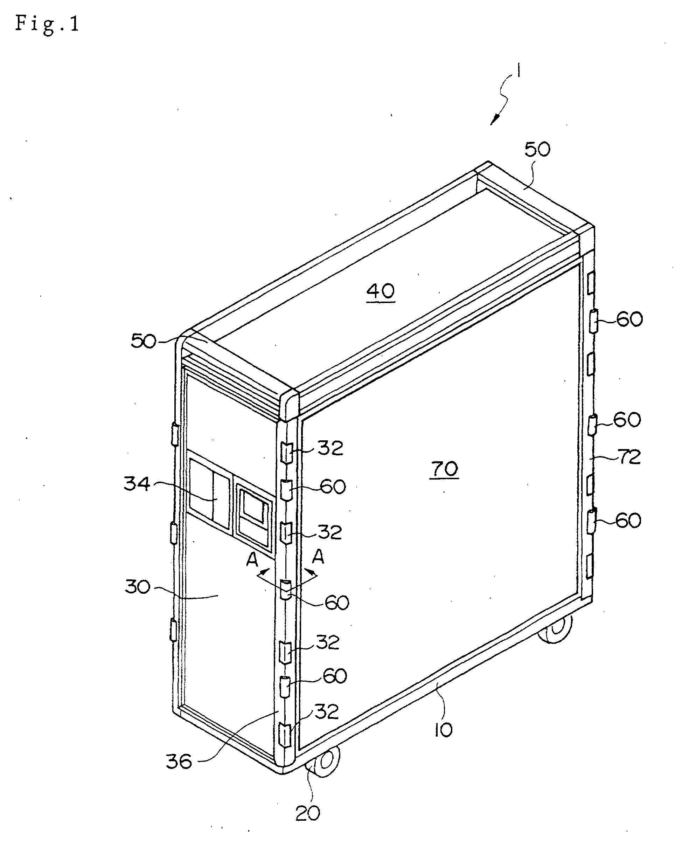

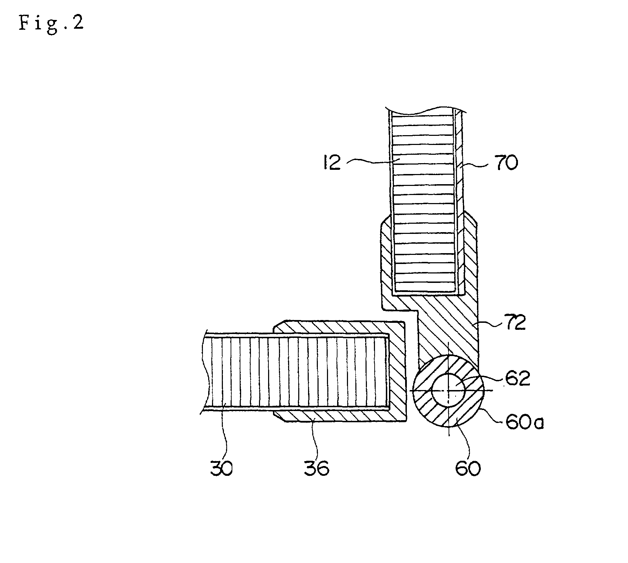

FIG. 1 is a schematic view of the service cart for serving in-flight meals applying the present device, and FIG. 2 is a cross-sectional view taken at line A-A of FIG. 1.

A service cart shown as a whole by the reference number 1 comprises a body 10 formed of a box-shaped panel material, and a caster 20 mounted on the lower portion of the body 10. On the front and back sides of the body 10 are mounted doors 30, which are supported by hinges 32 enabling the opening and closing movement of the door.

On the front surface of the door 30 is mounted a knob 34, and the lock of the door could be released by the operation of the knob 34.

The space 40 on the upper portion of the body 10 is used as a space for placing the bottles of beverages, ice, glasses and the like. Handles 50 are placed on the front and back sides of the upper portion of the body 10 so as to enable operation of the service cart.

The surface of the side walls of the body 10 is covered with a surface material 70. On the surface material are displayed an appropriate design and the like.

As shown in FIG. 2, the door 30 is formed of a panel material having a honeycomb structure, and on the edge portion of the panel member is mounted a rim member 36. The rim member 36 is formed by extruding an aluminum alloy and the like. Similarly, the side wall surface of the body is formed of a honeycomb structured panel material 12, and on the surface thereof is fixed a surface material 70. On the rim portion of the side wall surface is also mounted a rim member 72. The rim member 72 is also formed by extruding an aluminum alloy and the like.

On the service cart, a plurality of shock absorbers 60 are mounted on the rim member fixed to the side wall surface. The shock absorber 60 comprises a cylindrical rubber roller structure for example, and mounted rotatably by a shaft 62. The outer circumferential surface 60a of the shock absorber 60 is formed to have a size so as to protrude to the outer area of the rim member 36 of the door 30 or the outer rim of the rim member 72 on the side wall surface.

Therefore, when a plurality of service carts 1 are positioned adjacent to one another, the shock absorbers 60 mounted on each body will contact the other shock absorbers on another body, and will prevent the occurrence of damage caused by the rim members of carts being collided to each other.

Moreover, even when the service cart contacts other machinery and the like during movement of the cart, the existence of the shock absorbers 60 prevents the collision to the surface material or the rim member, and thereby effectively protects the service cart 1. As explained above, the present invention provides a service cart to be used in a cabin of an airplane and the like having a roller-type shock absorber for protecting the rim portion or the surface material of the side wall, which could easily be damaged and could easily attract the attention of passengers.

According to the device, the service cart could always be maintained to an aesthetically high quality at all times, and the improvement of services could be achieved.

## Claims

1. A service cart (1), said service cart (1) comprising a box-shaped body (10) for storing trays mounting tableware, hinged doors (30) mounted on the front and back sides of said body, and a caster (20) mounted on the lower portion of said body (10), **characterized in that** the side wall surface of said body (10) comprises a honeycomb panel and rim members (36,72) mounted on both side rim portions of said honeycomb panel and having roller type shock absorbers (60) mounted rotatably to said rim members (36,72).

2. A service cart (1) as claimed in claim 1, **characterized in that** the outer circumferential surface of said roller type shock absorbers (60) are formed to have a size so as to protrude to the outer side beyond the comer portion of said body (10).

3. A service cart (1) as claimed in claim 1 oder 2, **characterized in that** said roller type shock absorbers (60) are formed of an elastic material such as rubber.

## Patentansprüche

1. Servierwagen (1) mit einem kastenförmigen Gehäuse (10) zur Aufnahme von Tabletts mit Geschirr, scharnierförmig an der vorderen und hinteren Seite des Gehäuses angebrachten Türen (30) und einer Rollenanordnung (20), die im unteren Bereich des Gehäuses (10) angebracht ist, **dadurch gekennzeichnet, daß** die Seitenwandfläche des Gehäuses (10) eine Bienenwabenplatte und Kantenglieder (36,72) umfaßt, die an beiden seitlichen Randbereichen der Bienenwabenplatte angebracht sind und rollenförmige Stoßdämpfer (60) umfassen, die drehbar an den Kantengliedern (36,72) angebracht sind.

2. Servierwagen (1) nach Anspruch 1, **dadurch gekennzeichnet, daß** die äußere Umfangsfläche der rollenförmigen Stoßdämpfer (60) so gestaltet ist, daß sie eine Größe aufweist, daß sie nach außen über die Eckbereiche des Gehäuses (10) hinausragt.

3. Servierwagen (1) nach Anspruch 1 oder 2, **dadurch gekennzeichnet, daß** die rollenförmigen Stoßdämpfer (60) aus elastischem Material wie etwa Gummi bestehen.

## Revendications

1. Chariot de service (1), ledit chariot de service (1) comprenant un corps en forme de caisse (10) pour stocker des plateaux portant de la vaisselle, des portes articulées (30) montées sur les côtés avant et arrière dudit corps et une roulette (20) montée sur la partie inférieure dudit corps (10), **caractérisé en ce que** la surface de la paroi latérale dudit corps (10) comprend un panneau à structure à nid d'abeilles et des éléments de bordure (36, 72) montés sur les deux parties latérales de bordure dudit panneau à structure à nid d'abeilles et ayant des amortisseurs de choc de type rouleau (60) montés à rotation sur lesdits éléments de bordure (36, 72).

2. Chariot de service (1) selon la revendication 1, **caractérisé en ce que** la surface circonférentielle extérieure desdits absorbeurs de chocs de type rouleau (60) est formée pour avoir une dimension de façon à faire saillie vers le côté extérieur de l'autre côté de la partie de coin dudit corps (10).

3. Chariot de service (1) selon la revendication 1 ou 2, **caractérisé en ce que** lesdits absorbeurs de chocs de type rouleau (60) sont formés d'un matériau élastique tel que du caoutchouc.
